# EUROPÄISCHE PATENTSCHRIFT

(11) **EP 2 596 029 B1**
(45) Veröffentlichungstag und Bekanntmachung des Hinweises auf die Patenterteilung: **06.04.2022**
(21) Anmeldenummer: 11746496.6
(22) Anmeldetag: 15.07.2011
(51) Int. Cl.: C08F 8/00, C08F 14/26, C08J 3/28, C08K 5/13, C08L 27/18

(54) **MODIFIZIERTE PERFLUOR-KUNSTSTOFFE UND VERFAHREN ZU DEREN HERSTELLUNG UND VERWENDUNG**
MODIFIED PERFLUOROPLASTICS, METHOD FOR PRODUCING SAME, AND USE THEREOF
PLASTIQUES PERFLUORÉS MODIFIÉS, LEUR PROCÉDÉ DE FABRICATION ET LEUR UTILISATION

(30) Priorität: 22.07.2010 DE 102010038286
(43) Veröffentlichungstag der Anmeldung: 29.05.2013
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Marion
(86) Internationale Anmeldenummer: PCT/EP2011/062150
(87) Internationale Veröffentlichungsnummer: WO 2012/010515

(56) Entgegenhaltungen:
- WO-A1-2005/042597
- KLÜPFEL B., LEHMANN D.: "Functionalization of Irradiated PTFE Micropowder withMethacryl- or Hydroxy Groups for Chemical Coupling ofPTFE with Different Matrix Polymers", J. POLYM. SCI., Bd. 101, Nr. 5, 19. Juni 2006 (2006-06-19) , XP002662429,

## Beschreibung

Die Erfindung bezieht sich auf das Gebiet der Chemie und betrifft modifizierte Perfluor-Kunststoffe, die beispielsweise als Additive für Öle und Fette oder als Gleitlacke, ausgerüstet mit speziellen Haft-/Kopplungsgruppen, die zur Fixierung auf Substratoberflächen, wie z.B. Metalloberflächen, dienen, eingesetzt werden können, sowie ein Verfahren zu deren Herstellung und Verwendung.

"Bei der Suche nach geeigneten Polymermaterialien für den Kernreaktorbau wurde festgestellt, dass PTFE - im Gegensatz zu seiner hohen chemischen und thermischen Stabilität - außerordentlich strahlenempfindlich ist. Es wird sowohl unter inerten Bedingungen als auch in Gegenwart von Sauerstoff schon bei geringer Energiedosis abgebaut, bereits bei 0,2 bis 0,3 kGy spröde und bei < 100 kGy bröckelig.... Ab etwa 360 °C wird der rein strahlenchemische Abbau merklich von einem Thermischen überlagert.

Wegen des stochastischen Verlaufs des strahlenchemischen Abbaus entstehen Reaktionsprodukte mit einem breiten Kettenlängenspektrum. ...

Bei Bestrahlung von PTFE in Gegenwart von Sauerstoff werden aus den zunächst entstehenden Perfluoralkylradikalen Peroxy- und Alkoxyradikale gebildet...

Über die Zwischenstufe der Bildung des Alkoxyradikals wird das endständige Perfluoralkylradikal unter Kettenverkürzung und Bildung von Carbonyldifluorid schrittweise abgebaut.

Dagegen entstehen aus den seitenständigen Alkoxyradikalen Perfluoralkansäurefluoride und endständige Perfluoralkylradikale ... 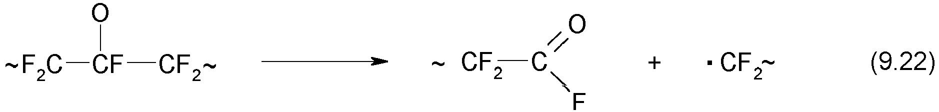 ... In sehr geringen Mengen werden auch perfluorierte Disäuren gebildet, da an einer Perfluorcarbonkette auch zwei seitenständige Radikalzentren entstehen können...

...Ungesinterte und unverpreßte PTFE-Emulsions- und -Suspensionspolymerisate sind von faserig-filzigem Charakter. Eine Übertragung z. B. der antiadhäsiven und Gleiteigenschaften des PTFE auf andere Medien durch Einarbeitung in wässrige oder organische Dispersionen, Polymere, Farben, Lacke, Harze oder Schmierstoffe ist nicht möglich, weil dieses PTFE sich nicht homogenisieren lässt, sondern zur Klumpenbildung neigt, agglomeriert, aufschwimmt oder sich absetzt.

Durch die Einwirkung energiereicher Strahlung mit einer Energiedosis von etwa 100 kGy wird aus den faserig-filzigen Polymerisaten infolge partiellen Abbaus der Polymerketten ein rieselfähiges Feinpulver erhalten. Dieses Pulver enthält noch lockere Agglomerate, die leicht zu Primärteilchen mit < 5 µm Partikeldurchmesser zerteilt werden können. Bei Bestrahlung in Gegenwart von Reaktanten werden funktionelle Gruppen in das Polymer eingebaut. Erfolgt die Bestrahlung in Luft, so werden nach GI. (9.22) (und anschließender Hydrolyse der -COF-Gruppen durch Luftfeuchtigkeit) Carboxylgruppen erhalten. Wird vor der Bestrahlung (NH₄)₂SO₃ zugemischt, dann sind S-haltige Gruppen zu erzielen. Diese funktionellen Gruppen mindern die Hydrophobie und Organophobie des PTFE so wesentlich, dass die gewonnenen Feinpulver gut mit anderen Medien homogenisiert werden können. Die positiven Eigenschaften des PTFE, wie die exzellenten Gleit-, Trenn- und Trockenschmiereigenschaften sowie die hohe chemische und thermische Stabilität, bleiben erhalten. Carboxyl- und Sulfogruppen, an die perfluorierte Kette gebunden, besitzen ebenfalls hohe chemische Inertheit....

Wegen der Unlöslichkeit des PTFE und seiner Abbauprodukte (mit Ausnahme der sehr niedermolekularen Produkte) können die üblichen Methoden der Molmassenbestimmung nicht angewandt werden. Die Molmassenbestimmung muss auf indirektem Wege erfolgen." [A. Heger et al., Technologie der Strahlenchemie an Polymeren, Akademie-Verlag Berlin 1990]

Nachteilig wirkt sich vielfach die Unverträglichkeit mit anderen Materialien aus. Durch eine chemische Aktivierung von PTFE durch die bekannten Verfahren mit (1.) Natriumamid in flüssigem Ammoniak und (2.) Alkalialkyl- und Alkali-Aromaten-Verbindungen in aprotischen inerten Lösungsmitteln ist eine Modifizierung zu erreichen. Über diese Modifizierungen können reaktiv oder auch nur über adsorptive Kräfte verbesserte Grenzflächenwechselwirkungen erreicht werden.

Die Verwertung der Produkte des PTFE-Abbaus erfolgt in vielfältigen Einsatzgebieten - so auch als Additiv zu Kunststoffen zum Zwecke der Erzielung von Gleit- oder Antihafteigenschaften. Die Feinpulversubstanzen liegen mehr oder minder fein dispergiert als Füllstoffkomponente in einer Matrix vor [Ferse et al., Plaste u. Kautschuk, 29 (1982), 458; Ferse et al. DD-PS 146 716 (1979)]. Beim Lösen der Matrixkomponente ist das PTFE-Feinpulver eliminierbar bzw. wird zurückerhalten.

Weiterhin bekannt sind gepfropfte fluorhaltige Kunststoffe (US 5,576,106), die aus fluorhaltigen Kunststoffpartikeln bestehen, an deren Oberfläche eine nichthomopolymerisierte ethylenisch ungesättigte Verbindung angepfropft ist. Dabei können die nichthomopolymerisierten ethylenisch ungesättigten Verbindungen Säuren, Ester oder Anhydride sein.

Hergestellt werden diese gepfropften fluorhaltigen Kunststoffe indem das mittels Schmelzverfahren hergestellte fluorhaltige Kunststoffpulver in Gegenwart der ethylenisch ungesättigten Verbindung einer Quelle von ionisierender Strahlung ausgesetzt wird. Dabei erfolgt die Anbindung der ethylenisch ungesättigten Verbindungen an die Oberfläche der fluorhaltigen Kunststoffpartikel.

Im Allgemeinen liegt das PTFE in technischen Verbunden physikalisch eingelagert und mehr oder minder homogen verteilt vor. Das eingelagerte PTFE bildet Fehlstellen im Materialsystem, was die interlaminare Verbundfestigkeit absenkt.

Nach der DE 198 23 609 A1 sind aber auch Compounds aus Polyamid- und Perfluoralkylsubstanzen und Mischungen dieser Compounds mit weiteren Polymersubstanzen bekannt, bei denen modifizierte Perfluoralkylsubstanzen mit Polyamid-Verbindungen in Schmelze über eine reaktive Umsetzung homogenisiert sind. Hergestellt werden die Compounds indem die Polyamidverbindungen mit modifizierten Perfluoralkylsubstanzen compoundiert und anschließend in Schmelze reaktiv umgesetzt werden.

Nach der DE 103 51 812 A1 sind modifizierte Perfluor-Kunststoffe, bestehend aus unter Sauerstoffeinfluss strahlenchemisch oder plasmachemisch modifizierten Perfluorpolymeren, welche gleichzeitig freie Radikale und -COOH- und/oder -COF-Gruppen aufweisen, an die durch nachfolgenden Reaktionen weitere Monomere oder Polymere gekoppelt sein können, bekannt. Hergestellt werden diese modifizierten Perfluor-Kunststoffen indem unter Sauerstoffeinfluss strahlenchemisch oder plasmachemisch modifizierte Perfluorpolymere, die gleichzeitig -COOH-und/oder -COF-Gruppen und reaktive Perfluoralkyl-(peroxy-)Radikal-Zentren aufweisen, durch Substitutionsreaktionen und/oder durch Additionsreaktionen und/oder durch Radikalreaktionen reaktiv mit niedermolekularen und/oder oligomeren und/oder polymeren Substanzen und/oder olefinisch ungesättigten Monomeren und/oder olefinisch ungesättigten Oligomeren und/oder olefinisch ungesättigten Polymeren umgesetzt werden. Dabei werden aliphatische und/oder aromatische und/oder Alkylaryl-Aminoverbindungen wie z.B. Aminophenole, Aminoalkylhydroxy-Verbindungen, Diamine mit strahlenchemisch modifizierten Perfluorpolymeren umgesetzt, wobei die Kopplung über die Aminogruppe zum Amid zu einer hydrolysebeständigen Bindung führt.

Obwohl in den Einsatzgebieten von PTFE-Feinpulver/(Mikro-)Pulver eine Verbesserung der tribologischen Eigenschaften im Vergleich zu den kommerziellen fluorcarbonfreien Additiven erreicht wird, ist deren Unverträglichkeit, die Unlöslichkeit, die lockere Einlagerung und auch inhomogene Verteilung für viele Einsatzgebiete von Nachteil. Hinzu kommt, dass es durch die physikalische Einlagerung des PTFE in den Verbundmaterialien zu Fehlstellen im Verbund kommt, die die interlaminare Festigkeit des Verbundes herabsetzen.

Im Falle des Einsatzes von modifizierten Perfluor-Kunststoffen, bei denen die Perfluorpolymere reaktiv mit aliphatischen Substanzen umgesetzt sind, und über eine Radikalreaktion oder die Reaktion der -COOH- und/oder -COF-Gruppen gekoppelt im Kunststoff vorliegen, sind insbesondere gekoppelte Verbindungen erhältlich, die aber nicht ausreichend hydrolysestabil und/oder thermostabil für verschiedene Einsatzfälle sind.

Die Aufgabe der vorliegenden Erfindung ist es, modifizierte Perfluor-Kunststoffe anzugeben, welche, in und/oder an Bauteilen verarbeitet, zu verbesserten Gleiteigenschaften und Verschleißfestigkeiten führen und dadurch zu einer höheren Lebensdauer der Bauteile führen und die dann gleichzeitig eine verbesserte Hydrolysestabilität und/oder Thermostabilität aufweisen, und weiterhin ein einfaches und leistungsfähiges Verfahren zur Herstellung derartiger modifizierter Perfluor-Kunststoffe anzugeben.

Die Aufgabe wird durch die in den Ansprüchen angegebene Erfindung gelöst. Vorteilhafte Ausgestaltungen sind Gegenstand der Unteransprüche.

Die erfindungsgemäßen modifizierten Perfluor-Kunststoffe bestehen aus strahlenchemisch oder plasmachemisch oder thermomechanisch modifizierten Perfluorpolymeren oder aus einem Gemisch aus strahlenchemisch und/oder plasmachemisch und/oder thermomechanisch modifizierten Perfluorpolymeren und niedermolekularen oder oligomeren oder polymeren Verbindungen jeweils mit mindestens einer Hydroxygruppe in Form von Phenolgruppen oder Hydroxyarylgruppen oder Hydroxyalkylgruppen oder mindestens einer phenolischen und mindestens einer aliphatischen Hydroxygruppe am Arylrest, die in einer Pulver-oder Pasten- oder Schmelzeverarbeitung unter Scherbedingungen reaktiv umgesetzt sind und die niedermolekularen oder oligomeren oder polymeren Di- oder Polyhydroxyaryl-Verbindungen über Etherbindungen chemisch an die Perfluorpolymere gekoppelt sind.

Vorteilhafterweise sind als Perfluorpolymere PTFE-(Mikro-)Pulver vorhanden.

Ebenfalls vorteilhafterweise sind mindestens zwei Hydroxygruppen in Form von Phenolgruppen oder Hydroxyarylgruppen oder Hydroxyalkylgruppen vorhanden.

Weiterhin vorteilhafterweise sind als niedermolekulare oder oligomere oder polymere aromatischen Mono- oder Di- oder Polyhydroxyaryl-Verbindungen Bisphenolkondensate oder Verbindungen aus der Klasse der Novolake (Phenol-Formaldehyd-Kondensate) oder Additionsprodukte aus Bisphenolkondensaten und Epoxiden, die mindestens eine phenolische Hydroxygruppe oder mindestens eine weitere Hydroxygruppe oder weitere reaktiv modifizierbare funktionelle Gruppen besitzen, oder aromatische Polyester oder Polycarbonat oder Polyphenylenether oder Gemische davon vorhanden.

Auch vorteilhafterweise sind als niedermolekulare oder oligomere oder polymere aliphatischen Mono- oder Di- oder Polyhydroxyalkyl-Verbindungen Polyether-Verbindungen aus der Klasse der Polyglycole oder Polyester-Verbindungen oder Additionsprodukte aus Carbonsäure und Epoxiden, die mindestens eine aliphatische oder phenolische Hydroxygruppe oder weitere reaktiv modifizierbare funktionelle Gruppe besitzen, oder Gemische davon vorhanden.

Vorteilhaft ist es auch, wenn als Di- oder Polyhydroxyaryl-Verbindungen 4,4'-Dihydroxydiphenylmethan oder 4,4'-Dihydroxydiphenylpropan oder 4,4'-Dihydroxydiphenylcyclohexan oder 4,4'-Dihydroxydiphenylether oder 4,4'-Dihydroxydiphenylsulfon oder 4,4'-Dihydroxybenzophenon oder Novolake in Form der Phenol-Formaldehyd(PF)-Kondensate oder Kresol-Formaldehyd-Kondensate vorhanden sind.

Ebenfalls vorteilhaft ist es, wenn die modifizierten Perfluorpolymere strahlenchemisch modifiziert sind, wobei noch vorteilhafterweise die modifizierten Perfluorpolymere strahlenchemisch unter Sauerstoffeinfluss modifiziert sind.

Weiterhin vorteilhaft ist es, wenn als strahlenchemisch modifiziertes PTFE ein mit mindestens 20 kGy, noch vorteilhafterweise mit mindestens 100 kGy, strahlenchemisch modifiziertes PTFE vorhanden ist.

Und auch vorteilhaft ist es, wenn die modifizierten Perfluorpolymere thermomechanisch modifiziert sind.

Von Vorteil ist es auch, wenn die strahlenchemisch oder plasmachemisch oder thermomechanisch modifizierten Perfluorpolymere reaktive und/oder thermisch reaktivierbare Perfluoralkyl-(peroxy-)Radikal-Zentren und/oder -COOH- und/oder COF-Gruppen oder Perfluoralkylen-Gruppen oder thermisch in-situ aktivierbare Gruppen, die unter Eliminierung die Bildung perfluorolefinischer Gruppen bewirken, aufweisen.

Ebenfalls von Vorteil ist es, wenn zur Realisierung der Scherbedingungen für die reaktive Umsetzung Mischer oder Kneter oder Zwei- oder Mehrwellenextruder oder Planetwalzenextruder eingesetzt sind.

Weiterhin von Vorteil ist es, wenn die reaktive Umsetzung bei Temperaturen von > 100 °C und vorzugsweise > 200 °C erfolgt.

Es ist auch von Vorteil, wenn die reaktive Umsetzung bei Temperaturen von mindestens der oder über der Schmelzetemperatur des PTFE-Materials erfolgt.

Eine weitere vorteilhafte Ausgestaltung der Erfindung besteht darin, dass eine weitere reaktive Umsetzung nach der reaktiven Umsetzung erfolgt.

Bei dem erfindungsgemäßen Verfahren zur Herstellung von modifizierten Perfluor-Kunststoffen werden strahlenchemisch oder plasmachemisch oder thermomechanisch modifizierte Perfluorpolymere und niedermolekulare oder oligomere oder polymere Verbindungen mit mindestens einer Hydroxygruppe in Form von Phenolgruppen oder Hydroxyarylgruppen oder Hydroxyalkylgruppen oder mindestens einer phenolischen und mindestens einer aliphatischen Hydroxygruppe homogenisiert und in Pulverform oder in Pastenform oder in Schmelze unter Scherbedingungen reaktiv umgesetzt.

Vorteilhafterweise wird strahlenchemisch modifiziertes Perfluorpolymer eingesetzt, wobei noch vorteilhafterweise unter Sauerstoffeinfluss strahlenchemisch modifiziertes Perfluorpolymer eingesetzt wird.

Ebenfalls vorteilhafterweise wird als strahlenchemisch modifiziertes PTFE ein mit mindestens 20 kGy, noch vorteilhafterweise mit mindestens 100 kGy, strahlenchemisch modifiziertes PTFE eingesetzt.

Weiterhin vorteilhafterweise wird als modifiziertes Perfluorpolymer ein thermomechanisch modifiziertes Perfluorpolymer eingesetzt.

Und auch vorteilhafterweise werden zur Realisierung der Scherbedingungen für die reaktive Umsetzung Kneter oder Zwei- oder Mehrwellenextruder oder Planetwalzenextruder eingesetzt werden.

Vorteilhaft ist es auch, wenn die reaktive Umsetzung bei Temperaturen von > 100 °C und vorzugsweise > 200 °C durchgeführt wird.

Ebenfalls vorteilhaft ist es, wenn die reaktive Umsetzung bei Temperaturen von mindestens der oder über der Schmelzetemperatur des PTFE-Materials durchgeführt wird.

Weiterhin vorteilhaft ist es, wenn eine weitere reaktive Umsetzung nach der reaktiven Umsetzung durchgeführt wird.

Von Vorteil ist es auch, wenn das modifizierte Perfluorpolymer im Gemisch mit der/n niedermolekularen oder oligomeren oder polymeren Verbindung(en) mit mindestens einer Hydroxygruppe in einem Kneter oder (Mehrwellen-)Extruder als Pulver- oder Pastenmischung unter Scherung bei Temperaturen > 100 °C, vorzugsweise > 200 °C verarbeitet wird.

Erfindungsgemäß werden die erfindungsgemäßen und erfindungsgemäß hergestellten modifizierten Perfluor-Kunststoffen als Additiv in Fetten, Ölen oder in Gleitlacken, als Additiv/Bestandteil in PF/Phenol-Formaldehyd- oder Epoxydharzen und andere aushärtbare Harze/Polymersubstanzen oder in Thermoplasten für tribologisch beanspruchte Form-/Bauteile oder als reaktive Blendkomponente oder in Substanz zur Substratoberflächenmodifizierung oder als Beschichtung von Bauteilen verwendet.

Mit der erfindungsgemäßen Lösung wird es erstmals möglich, Bauteile aus modifizierten Perfluor-Kunststoffen oder Bauteile, die mit modifizierten Perfluor-Kunststoffen teilweise oder vollständig beschichtet sind, anzugeben und herzustellen, die verbesserte antiadhäsive Eigenschaften und/oder Gleiteigenschaften und Verschleißfestigkeiten aufweisen, was zu einer Erhöhung der Lebensdauer des Bauteiles führt, und gleichzeitig auch verbesserte Hydrolysestabilität und/oder Thermostabilität des Perfluor-Kunststoffes als Bauteil oder als Beschichtung zeigen. Erreicht wird dies, indem eine chemische Kopplung oder Kompatibilisierung der Perfluorpolymere in der Harzmatrix auf molekularer Ebene erreicht wird.

Erfindungsgemäß werden die strahlenmodifizierten oder plasmamodifizierten oder thermomechanisch modifizierten Perfluorpolymere oder das Gemisch aus strahlenchemisch und/oder plasmachemisch und/oder thermomechanisch modifizierten Perfluorpolymeren mit niedermolekularen oder oligomeren oder polymeren Verbindungen, die mindestens eine Hydroxygruppe in Form von Phenolgruppen oder Hydroxyarylgruppen oder Hydroxyalkylgruppen oder mindestens einer phenolischen und mindestens einer aliphatischen Hydroxygruppe am Arylrest besitzen, in einer Pulver- oder Pasten- oder Schmelzeverarbeitung unter Scherbedingungen reaktiv umgesetzt, indem die eine Hydroxygruppe oder mindestens eine der Hydroxygruppen und vorzugsweise die phenolische Hydroxygruppe pro Molekül unter Kopplung mit dem Perfluorpolymer reagiert.

Während und/oder nach dieser reaktiven Umsetzung können die entstandenen Perfluor-Kunststoffe mit den freien Phenolgruppen oder Hydroxyarylgruppen oder aliphatischen Hydroxygruppen oder weiteren reaktiven funktionellen Gruppen oder aktiven Zentren an den gekoppelten niedermolekularen oder oligomeren oder polymeren, aliphatischen oder aromatischen oder alkylaromatischen Verbindungen durch dem Fachmann bekannte Kopplungs- und Modifizierungsreaktionen in Form von Kondensations- und/oder Additions- und/oder Veretherungs- und/oder Veresterungsreaktionen mit organischen Isocyanat-, Carbodiimid-, Uretdion-, Epoxy-, Oxazolin-, Carbonsäure-, (Carbon-)Säureanhydrid-, (Carbon-)Säurehalogenid-Verbindungen, Formaldehyd-kondensaten und/oder anorganischen (Säure-Verbindungen reaktiv zu den erfindungsgemäßen modifizierten Perfluor-Kunststoffen weiter umgesetzt werden. So werden dann die erfindungsgemäßen, über eine hydrolysestabile Etherbindung als chemische Bindung zwischen der Perfluorpolymer-Partikeloberfläche und den niedermolekularen oder oligomeren oder polymeren Verbindungen, gekoppelten, modifizierten Perfluor-Kunststoffe realisiert.

Unter "Hydroxyaryl" wird verstanden, dass neben mindestens einer phenolischen Hydroxygruppe noch mindestens eine weitere reaktive funktionelle Gruppe und/oder mindestens ein weiteres reaktiv modifizierbares Zentrum, wie z.B. bei den Phenol-Formaldehydharzen, am Aryl-Rest vorhanden ist.

Bekannt ist, dass strahlen- oder plasmamodifizierte Perfluorpolymere aufgrund ihrer Herstellung und Modifizierung Carbonylfluorid- und/oder Carbonsäuregruppen und persistente Perfluor-(peroxy-)radikale besitzen können.

Bekannt ist weiterhin, dass Carbonsäurephenylester und auch Carbonsäurealkylester wenig beständig gegen Hydrolyse, Alkoholyse und/oder Aminolyse sind und dabei unter Spaltung der (Phenyl-/Alkyl-)Ester-Gruppe reagieren.

Werden nun an Stelle der Carbonsäurephenyl- oder Carbonsäurealkylester die Perfluoralkylcarbonsäurephenyl- oder Perfluoralkylcarbonsäurealkylester hergestellt, so ist die Reaktivität dieser Esterbindung gegenüber nuklephilen Angriffen weiter erhöht. Auch ist eine direkte Veresterung der phenolischen Hydroxygruppe von Phenolverbindungen mit Carbonsäuren aufgrund der höheren Acidität und der geringeren Reaktivität der Phenole (im Vergleich mit Alkoholen) weder bekannt noch zu erwarten, was nachfolgend darlegt ist.

"Im Gegensatz zur direkten Veresterung von Carbonsäuren lassen sich aus den Carbonsäurehalogeniden oder -anhydriden auch Ester der ... Phenole herstellen."

(Autorenkollektiv, Organikum, Organisch-chemisches Grundpraktikum, 13. Auflage, VEB Deutscher Verlag der Wissenschaften, Berlin 1974, S. 443). D.h. (Perfluoralkyl-)Carbonsäurephenylester lassen sich nur durch Umsetzung von aktivierten (Perfluoralkyl-)Carbonsäurederivaten wie Carbonsäurehalogenide oder Carbonsäureanhydride oder von in-situ aktivierten Carbonsäurederivaten mit Verbindungen mit phenolischen Hydroxygruppen synthetisieren. Phenylester können auch aufgrund ihrer Reaktivität als Zwischenverbindung für Umesterungs- und Amidierungsreaktionen von Carbonsäureverbindungen eingesetzt werden.

Folglich kann nach dem Stand der Technik im Fall der Umsetzung der PTFE-Carbonsäuregruppen mit einer phenolischen Hydroxygruppe der Hydroxyaryl-Verbindung keine Kopplung über eine Veresterung stattfinden.

Ebenfalls kann nach dem Stand der Technik eine Kopplung von Perfluorpolymeren und insbesondere von PTFE nur durch Reaktion einer Carbonylfluoridgruppe als aktivierte Carbonsäuregruppe am PTFE mit der Phenolgruppe zum Phenylester stattfinden. Auch kann nach dem Stand der Technik eine Kopplung von Perfluorpolymeren und insbesondere von PTFE durch Reaktion einer Carbonylfluoridgruppe als aktivierte Carbonsäuregruppe am PTFE mit der Hydroxyalkylgruppe zum Alkylester stattfinden. Diese Kopplung des Perfluorpolymers mit der niedermolekularen oder oligomeren oder polymeren Verbindung über die Perfluoralkylcarbonsäurephenylester- oder Perfluoralkylcarbonsäurealkylester-Form ist jedoch, wie bekannt, sehr empfindlich gegenüber Hydrolyse-, Alkoholyse- und/oder Aminolysereaktionen. Perfluoralkylcarbonsäuren werden in Esterform bekanntermaßen auch aufgrund ihrer leichten Abspaltbarkeit als Schutzgruppe in der Chemie eingesetzt.

Davon ausgehend wurde erfindungsgemäß gefunden, dass modifizierte Perfluor-Kunststoffe aus strahlenchemisch oder plasmachemisch oder thermomechanisch modifizierten Perfluorpolymeren und niedermolekularen oder oligomeren oder polymeren Verbindungen oder aus einem Gemisch aus strahlenchemisch und/oder plasmachemisch und/oder thermomechanisch modifizierten Perfluorpolymeren mit mindestens einer Hydroxygruppe in Form von Phenolgruppen oder Hydroxyarylgruppen oder Hydroxyalkylgruppen oder mindestens einer phenolischen und mindestens einer aliphatischen Hydroxygruppe am Arylrest durch reaktive Umsetzung in einer Pulver- oder Pasten- oder Schmelzeverarbeitung unter Scherbedingungen gebildet werden, wovon die eine oder mindestens eine der Phenolgruppen oder Hydroxyarylgruppen oder Hydroxyalkylgruppen pro Molekül unter Ausbildung einer stabilen Etherbindung mit dem modifizierten Perfluorpolymer und vorzugsweise mit dem PTFE, d.h. mit der PTFE-Partikeloberfläche reagiert, und dadurch eine stabile chemische Kopplung erreicht wird. So entstandene Perfluorpolymer-Phenylether- oder Arylether- oder Alkylether-Verbindungen, die noch mindestens eine freie Phenolgruppe oder Hydroxyarylgruppe oder Hydroxyalkylgruppe oder mindestens ein weiteres reaktives Zentrum oder mindestens eine weitere funktionellen Gruppe am über die Etherbindung gekoppelten organischen Rest für Folgereaktionen besitzen, d.h. die chemisch über die Phenyl- oder Arylether- oder Alkyletherbindung gekoppelten Substanzen mit mindestens einer weiteren reaktiv modifizierbaren Funktion, sind alkoholyse-und/oder aminolyse- und/oder hydrolysebeständig miteinander verbunden und folglich weisen auch die erfindungsgemäßen Perfluor-Kunststoffe diese Eigenschaften auf.

Werden jedoch Hydroxyoligo- oder Hydroxypolyester-Verbindungen als Hydroxy-Verbindung über die Etherbindung an das Perfluorpolymer gekoppelt, so ist dem Fachmann bekannt, dass zwar die Etherbindung als Kopplungsstelle zwischen dem Perfluorpolymer und der gekoppelten Hydroxy-Verbindung alkoholyse- und/oder aminolyse- und/oder hydrolysebeständig verbunden vorliegt, jedoch die Esterbindungen in der gekoppelten oligomeren oder polymeren Hydroxy-Verbindung nicht diese Alkoholyse- und/oder Aminolyse- und/oder Hydrolysebeständigkeit aufweisen. Dies gilt sowohl für gekoppelte aliphatische, teilaromatische und auch aromatische Oligo- und Polyester-Verbindungen.

Die erfindungsgemäß gebildeten stabilen Etherbindungen entstehen entweder durch Substitutionsreaktionen von aktiven oder als Salz aktivierten Phenol- oder Hydroxyaryl- oder Hydroxyalkylgruppen mit aktiven oder aktivierten Halogengruppen oder gleichwertigen Abgangsgruppen oder durch eine Michael-analoge Additionsreaktion der phenolischen oder aliphatischen Hydroxygruppen mit vorhandenen oder in-situ gebildeten/generierten perfluorolefinischen Gruppen am Perfluorpolymer. Perfluorolefinische Gruppen sind im strahlenchemisch oder plasmachemisch modifizierten Perfluorpolymer und insbesondere PTFE in niedrigen Konzentrationen im Partikelinnern vorhanden. Solche Gruppen an der Partikeloberfläche, zugänglich für Agenzien, reagieren aufgrund der hohen Reaktivität z.B. über eine Additionsreaktion mit Wassermolekülen. Solche deaktivierten Reaktionsprodukte können nach einer thermischen Aktivierung erneut Kopplungsreaktionen eingehen. Andererseits können auch abgeschirmte aktive Gruppen im Partikelinnern durch Scherung freigelegt und so mit Hydroxygruppen zu Ethern reagieren oder es können thermisch generierte Gruppen z.B. durch thermische Decarboxylierungsreaktion der Perfluoralkylcarbonsäuregruppe oder Dehydrohalogenierungsreaktion während der reaktiven Umsetzung erzeugt und in-situ mit den Hydroxygruppen der Phenol- oder Hydroxyaryl- oder Hydroxyalkyl-Verbindung umgesetzt werden. Dies kann vorteilhaft in einem Mischer, Kneter oder Extruder erfolgen, indem die strahlenchemisch oder plasmachemisch modifizierten Perfluorpolymere mit Carbonylfluorid- und/oder Carbonsäuregruppen und/oder Perfluoralkylengruppen und persistenten Perfluor-(peroxy-)radikalen oder die thermomechanisch modifizierten Perfluorpolymere mit der Phenol- oder Hydroxyaryl-oder Hydroxyalkyl-Verbindung unter Scherung innig gemischt und in Kontakt und zur Reaktion gebracht werden.

Diese erfindungsgemäßen modifizierten Perfluor-Kunststoffe können als Additive (z.B. für Öle und Fette sowie Gleitlacke oder in reaktive Harze wie Phenolharze, beispielsweise Resol, Epoxidharze, Vinylesterharze, UP-Harze (ungesättigte Polyesterharze) oder andere aushärtbare Harze) oder in Substanz, die gegebenenfalls/vorteilhafterweise zusätzlich modifiziert mit speziellen Haft-/Kopplungsgruppen wie z.B. Phosphorsäure- oder Phosphonsäure-Gruppen zur Fixierung auf Substratoberflächen, wie z.B. Metalloberflächen, ausgerüstet sind, eingesetzt werden. Die chemische Modifizierung bewirkt neben der chemischen Kopplung ferner eine bessere Dispergierung durch die intensive Wechselwirkung der Gruppen mit dem Medium oder der Matrix. In Gleitlacken und tribologisch ausgerüsteten Kunststoffen und hier speziell thermoplastischen oder duromeren Verbundwerkstoffen werden verbesserte (Matrix-)Eigenschaften sowie verbesserte tribologische Eigenschaften hinsichtlich Gleitreibung und Verschleiß erreicht. Je nach Struktur und Funktionalität können die erfindungsgemäßen modifizierten Perfluor-Kunststoffe in die Matrix eingebunden/gekoppelt werden oder nur über die gekoppelten Reste mit der Matrix kompatibilisiert vorliegen. Ferner können die erfindungsgemäßen, chemisch modifizierten Perfluor-Kunststoffe als Primer in Substanz oder im Gemisch mit einer weiteren Polymersubstanz zur direkten Haftung auf Materialoberflächen eingesetzt werden.

Durch den Zusatz von Perfluorpolymeren und insbesondere PTFE als Festschmierstoff in Duromeren sind Gleitschichten, Gleitlager und technische Laminate mit verbesserten mechanischen und tribologischen Eigenschaften herstellbar.

Ein wesentlicher Vorteil dieser Erfindung besteht darin, dass eine chemisch kovalente, über Etherbindungen hydrolyse-, alkoholyse- und/oder aminolysestabile sowie auch thermisch stabile Kopplung des Perfluorpolymer-Partikels mit den niedermolekularen oder oligomeren oder polymeren Verbindungen erreicht wird. Solche erfindungsgemäßen modifizierten Perfluor-Kunststoffe können in dem Fachmann bekannten Folgereaktionen kovalent, d.h. chemisch gekoppelt/kompatibilisiert in Phenol-, Melamin- und Harnstoffharze sowie in Epoxidharze oder andere aushärtbare Harze eingebunden werden, wodurch eine verbesserte Dispergierung und dadurch verbesserte Material- sowie tribologische Eigenschaften erreicht werden können. Ferner können an den freien phenolischen Hydroxygruppen Folgereaktionen, wie z.B. die Veresterung mit organischen und anorganischen Säuren, durchgeführt werden. Durch Modifizierung nach bekannten Verfahren z.B. mit Phosphorsäure-Verbindungen wie beispielsweise mit Phosphorpentoxid, Phosphorylchlorid oder Phosphortrichlorid etc. und anschließende Hydrolyse oder Veresterung werden reaktive Haftgruppen an den erfindungsgemäßen chemisch modifizierten Perfluor-Kunststoffen zu Metalloberflächen erzeugt, die in Ölen, Fetten u.a. Schmiermitteln eingesetzt vorteilhaft Bindungen zu den Substraten ausbilden, wodurch wesentlich verbesserte tribologische, d.h. Gleitreibungs- und Verschleißeigenschaften erreicht werden. Ferner bilden solche Produkte bei thermischer Fixierung auf Metalloberflächen eine direkte Haftung aus, wodurch PTFE-oberflächenmodifizierte Produkte herstellbar sind.

Nachfolgend wird die Erfindung durch mehrere Ausführungsbeispiele näher erläutert.

### Beispiel 1:

### Herstellung des PF(Novolak)-modifizierten PTFE-Pulvers (PF+PTFE)-1 im Laborkneter

95 g PTFE (TF2025, Emulsionspolymerisat, Dyneon/3M, 500 kGy, elektronenbestrahlt) werden mit 10 g Novolak (Bakelite PF 0205 DF 04) vorgemischt und zusammen in eine elektrisch beheizte Knetkammer (Haake-Laborkneter, 50 ccm) gegeben und bei 250 °C 5 Minuten mit 100 U/min reaktiv umgesetzt. Nach Öffnen der Kammer wird das Produkt entnommen.

Nach Abtrennung/Extraktion der noch löslichen PF-Anteile wird ein rosarotes Festprodukt ((PF+PTFE)-1, gereinigt) erhalten, das im IR-Spektrum PF-Absorptionen aufweist. Eine Nachbehandlung des unlöslichen Festproduktes durch Rückflusserhitzung in Wasser, in einer wässrigen Butylamin-Lösung und auch in Methanol zeigte keine Veränderung, d.h. Absenkung der PF-Absorptionen im IR-Spektrum sowie auch keine Farbveränderung als subjektives Merkmal, was die Hydrolyse-, Aminolyse- und Alkoholysestabilität dieses Produktes (PF+PTFE)-1 belegt.

Werden 5 g gereinigtes und getrocknetes (PF+PTFE)-1 entgast, mit Argon als Schutzgas gespült und auf 300 °C im Metallbad erhitzt und wieder abgekühlt, so wird anschließend IR-spektroskopisch dasselbe Spektrum wie von der Ausgangssubstanz, d.h. vor dieser Wärmebehandlung erhalten. Thermogravimetrieuntersuchungen belegen ferner, dass das gereinigte und getrocknete (PF+PTFE)-1 keinen merklichen Gewichtsverlust bis 300 °C aufweist, was die Thermostabilität dieses Produktes (PF+PTFE)-1 belegt.

### Beispiel 2:

### Herstellung des PF(Novolak)-modifizierten PTFE-Pulvers (PF+PTFE)-2 im Laborextruder

900 g PTFE (Zonyl MP1100, Emulsionspolymerisat, bestrahlt, DuPont) werden mit 100 g Novolak (Bakelite PF 0205 DF 04) vorgemischt und langsam in einen Haake-Labor-Doppelschneckenextruder (16 mm, 100 U/min, Temperaturprofil: 25 °C - 250 °C - 250 °C - 200 °C Düsenpaket 150 °C) dosiert. Die Düse wurde zuvor aus dem Düsenpaket entfernt, so dass das reaktiv umgesetzte Produkt als krümeliger Feststoff aus der Öffnung kam und in einem Gefäß mit flüssigem Stickstoff aufgefangen wurde. Die Abtrennung/Extraktion der noch löslichen PF-Anteile erfolgte wie in Beispiel 1. Das rosarote Festprodukt ((PF+PTFE)-2, gereinigt) weist im IR-Spektrum PF-Absorptionen auf. Die Nachfolgeoperationen wie in Beispiel 1 führten zu derselben Aussage hinsichtlich der Hydrolyse, Aminolyse-, Alkoholyse-und Thermostabilität.

### Beispiel 3:

### Herstellung des PF(Novolak)-modifizierten PTFE-Pulvers (PF+PTFE)-3 im Laborextruder

900 g PTFE (Zonyl MP1200, Suspensionspolymerisat, bestrahlt, DuPont) werden mit 100 g Novolak (Bakelite PF 0205 DF 04) vorgemischt und langsam in einen Haake-Labor-Doppelschneckenextruder (16 mm, 100 U/min, Temperaturprofil: 25 °C - 250 °C - 250 °C - 200 °C - Düsenpaket ohne Düse 150 °C) dosiert. Die Düse wurde aus dem Düsenpaket entfernt, so dass das reaktiv umgesetzte Produkt als krümeliger Feststoff aus der Öffnung kam und in einem Gefäß mit flüssigem Stickstoff aufgefangen wurde. Die Abtrennung/Extraktion der noch löslichen PF-Anteile erfolgte wie in Beispiel 1. Das rosarote Festprodukt weist im IR-Spektrum PF-Absorptionen auf, die etwas geringer waren als in Beispiel 1. Die Nachfolgeoperationen wie in Beispiel 1 führten zu derselben Aussage hinsichtlich der Hydrolyse, Aminolyse-, Alkoholyse- und Thermostabilität.

### Beispiel 4:

### Herstellung des 4,4'-Dihydroxydiphenylsulfon-modifizierten PTFE-Pulvers (DHDPSu+PTFE) im Laborkneter

95 g PTFE (Zonyl MP1100, Emulsionspolymerisat, bestrahlt, DuPont) werden mit 5 g DHDPSu vorgemischt und zusammen in eine elektrisch beheizte Knetkammer (Haake-Laborkneter, 50 ccm) gegeben und bei 250 °C 5 Minuten mit 100 U/min reaktiv umgesetzt. Nach Öffnen der Kammer wird das Produkt entnommen.

### Nach Abtrennung/Extraktion der noch löslichen DHDPSu-Anteile wird ein helles Festprodukt erhalten, das im IR-Spektrum Absorptionen des DHDPSu aufweist. Die Nachfolgeoperationen wie in Beispiel 1 führten zu derselben Aussage hinsichtlich der Hydrolyse, Aminolyse-, Alkoholyse- und Thermostabilität.

### Beispiel 5:

### Herstellung des PF(Novolak)-modifizierten PTFE-Pulvers (PF+PTFE)-4 im Laborkneter

90 g PTFE (TF9205, Dyneon/3M, thermomechanisch modifiziert, unbestrahlt) werden mit 15 g Novolak (Bakelite PF 0205 DF 04) vorgemischt und zusammen in eine elektrisch beheizte Knetkammer (Haake-Laborkneter, 50 ccm) gegeben und bei 270 °C 5 Minuten mit 100 U/min reaktiv umgesetzt. Nach Öffnen der Kammer wird das Produkt entnommen.

Nach Abtrennung/Extraktion der noch löslichen PF-Anteile wird ein rosarot gefärbtes Festprodukt erhalten, dass im IR-Spektrum PF-Absorptionen aufweist. Die Nachfolgeoperationen wie in Beispiel 1 führten zu derselben Aussage hinsichtlich der Hydrolyse, Aminolyse-, Alkoholyse- und Thermostabilität.

### Beispiel 6:

### Modifizierung/Weiterverarbeitung chemisch modifizierter Perfluor-Kunststoffe am Beispiel (PF+PTFE)-2

### 6.1 Herstellung eines Resols mit 10 Ma.-% (PF+PTFE)-2

Resol-Herstellung (1/10 Ansatz) entsprechend der Vorschrift in Houben-Weyl, Makromolekulare Stoffe II, E 20/3 (987) 1805, [Vorschrift nach (7) M. G. Kim et al., Am. Chem. Soc., Polym. Chem., Polym. Prepr. 24 (1983) 173]

In 1 mol Phenol (94 g) werden 13 g an (PF+PTFE)-2 zugegeben und unter Rühren dispergiert. Anschließend werden 1,5 mol 37 %-iges Formalin (121,6 g) und 1,88 g 50 %ige Natronlauge zugegeben und innerhalb von 30 min auf 100 °C gebracht. Danach wird die Mischung 30 min bei 100 °C gehalten. Im Vakuum wird das Reaktionsgemisch unter Abdestillation des Wassers eingeengt.

Es wird ein PTFE-modifiziertes Resol erhalten, in dem das PTFE homogen dispergiert vorliegt und in dem die modifizierten PTFE-Partikel erst nach Tagen anfangen, langsam zu sedimentieren.

Da Resole bekannterweise Wasser enthalten und bei der Resol-Herstellung und auch bei der Härtung Wasser entsteht, werden die (hydrolyse-)stabil, über eine Etherbindung gekoppelten Novolakmoleküle (Bakelite PF 0205 DF 04) am (PF+PTFE)-2 nicht hydrolytisch abgespalten. Dadurch kann sich während der Resol-Herstellung und vor allem auch während der Härtungsreaktion bei höheren Temperaturen dann durch Neben-/Hydrolysereaktionen keine physikalische Mischung bilden oder entstehen, in der die mechanischen und tribologischen Eigenschaften je nach Verfahrensführung sich verändern oder verschlechtern. Mit der Umsetzung des stabil gekoppelten (PF+PTFE)-2 wird eine stabile Verarbeitungsmorphologie und es werden stabil einstellbare Eigenschaften erreicht.

### 6.2 Aramidfaser-Phenolharz - Untersuchung der Produkteigenschaften

Aramidfaser-Vlies wird mit dem PTFE-modifizierten Resol imprägniert, getrocknet und verpresst. Die miteinander verpressten, ausgehärteten Platten weisen bessere mechanische und tribologische Eigenschaften auf als Platten, die mit Resol hergestellt wurden, in das unmodifiziertes PTFE-Pulver eingerührt wurde:

| Kenngröße | Resol | + unmodifiziertes PTFE physikalische Mischung | + (PF+PTFE)-2 |
|---|---|---|---|
| Zugfestigkeit [N/mm²] | | 55,3 | 68,7 |
| Druckfestigkeit [N/mm²] | | 135,6 | 160,5 |
| Scherfestigkeit [N/mm²] | | 4,8 | 9,3 |
| Biegefestigkeit [N/mm²] | | 87,8 | 125,7 |

Während sich die Reibungszahlen von f = 0,20 (unmodifziertes PTFE) und f = 0,18 (PF+PTFE)-2 kaum unterscheiden, weist das Material mit (PF+PTFE)-2 einen um 45 % geringeren Verschleiß im Klötzchen/Ring-Versuch auf.

Ferner kann die Imprägnierung von weiteren Fadenmaterialien oder textilen Flächengebilden oder Preforms aus Glasfasern, Kohlenstofffasern, natürlichen Fasern wie beispielsweise Baumwollfasern oder Seide und/oder Synthesefasern wie beispielsweise Polyamid- oder Polyesterfasern oder Fasergemischen/Mischgeweben davon mit erfindungsgemäßen PTFE-modifizierten Resolen, hergestellt mit chemisch modifizierten Perfluor-Kunststoffen wie beispielsweise dem (PF+PTFE)-2, erfolgen. Es werden in diesen Materialien im Vergleich zu den Produkten, in die die physikalische Mischung aus Resol und PTFE eingesetzt werden, verbesserte mechanische und tribologische Eigenschaften erhalten.

### Beispiel 7:

### Herstellung eines Epoxidharzes mit 10 Ma.-% (PF+PTFE)-2 (heiß härtend)

In ein formuliertes, heiß härtendes Epoxidharz (Härter: Dicyandiamid) werden 10 Ma.-% (PF+PTFE)-2 mittels Zahnscheibenrührer bei Raumtemperatur dispergiert und anschließend entgast. Die Dispersion weist eine ausreichende Dispersionsstabilität während des Aushärtungsprozesses bei 160 °C auf. Daraus hergestellte Platten werden zu Probekörpern zersägt und die tribologischen Eigenschaften im Klötzchen/Ring-Test im Vergleich zu Platten aus reinem Epoxidharz und Epoxidharz, in das unmodifiziertes PTFE-Pulver nur physikalisch dispergiert wurde, untersucht. Die Reibungszahl mit dem (PF+PTFE)-2 liegt mit f = 0,17 nur geringfügig niedriger als mit dem unmodifizierten PTFE mit f = 0,21. Dies ist auf die bessere Verteilung in der Epoxidharz-Matrix zurückzuführen. Das reine Epoxidharz weist dagegen Stick-Slip auf und der Reibungszahl liegt bei f = 0,6. Analog verhält es sich mit dem Verschleiß. Bei der Probe mit (PF+PTFE)-2 ist der Verschleiß 60 % niedriger als bei der Probe mit unmodifiziertem PTFE. Das reine Epoxidharz ohne PTFE-Zusatz ist für tribologische Anwendungen im Trockenlauf/ungeschmiert nicht geeignet.

### Beispiel 8:

### Herstellung eines Epoxidharz mit 10 Ma.-% (PF+PTFE)-2 (kalt härtend)

In 75 g Rütapox L 20 werden 10 g (PF+PTFE)-2 unter Rühren dispergiert. Die Dispersion wird 1 Stunde bei 150 °C und weitere 30 Minuten bei 180 °C gerührt. Nach dem Abkühlen werden 20 g Aminhärter kalt in die Dispersion eingerührt/homogenisiert. Es werden Platten hergestellt, die noch 2 Stunden bei 100 °C getempert/nachgehärtet werden.

Die getemperten Platten werden zu Probekörpern zersägt und die tribologischen Eigenschaften im Klötzchen/Ring-Test untersucht. Als Vergleich wurden analog Platten aus reinem Epoxidharz und Epoxidharz mit unmodifiziertem PTFE-Pulver (unmodifiziertes PTFE-Pulver wurde nur physikalisch dispergiert) kalt gehärtet hergestellt und wie oben getempert. Die Reibungszahl mit dem (PF+PTFE)-2 liegt mit f = 0,19 geringfügig niedriger als mit dem unmodifizierten PTFE mit f = 0,25. Dies wird wie in Beispiel 7 auf die bessere Verteilung in der Epoxidharz-Matrix zurückgeführt. Das reine Epoxidharz verhält sich in den tribologischen Eigenschaften wie in Beispiel 7. Analog verhält es sich mit dem Verschleiß. Bei der Probe mit (PF+PTFE)-2 ist der Verschleiß 70 % niedriger als bei der Probe mit unmodifiziertem PTFE.

Analog zu Beispiel 6 können auch die mit chemisch modifizierten Perfluor-Kunststoffen wie beispielsweise (PF+PTFE)-2 modifizierten Epoxidharze zu faserverstärkten Materialien und/oder Compositen/Verbundwerkstoffen weiterverarbeitet werden.

### Beispiel 9:

### Umsetzung des PF(Novolak)-modifizierten PTFE-Pulvers (PF+PTFE)-2 mit Phosphorverbindungen

### 9.1 Umsetzung des PF(Novolak)-modifizierten PTFE-Pulvers (PF+PTFE)-2 mit Phosphorpentoxid zur Herstellung eines haftgruppenmodifizierten PTFE-Pulvers [(PTFE-PF-O)m-PO(OH)ₙ] mit m = 1 und n = 2 oder m = 2 und n = 1

25 g (PF+PTFE)-2, gereinigt, werden in 200 ml NMP mittels Ultraturraxrührer unter Inertgas-/Stickstoffspülung dispergiert. Zur Dispersion werden bei 80 °C 5 g Phosphorpentoxid zugesetzt und das Reaktionssystem unter Rühren auf 150 °C erwärmt und 2 Stunden gerührt. Anschließend wird auf 190 °C erwärmt und nach 30 Minuten Rühren wurde die Reaktion beendet. Nach dem Abkühlen werden 100 ml Wasser/Methanol (1:1) zugegeben und 10 Minuten gerührt. Die Dispersion wird unter Rühren in Methanol gefällt und abgesaugt. Das Festprodukt wird dann 3 x in Wasser gerührt und abgesaugt, anschließend in Methanol 1 Stunde unter Rückfluss erhitzt und abgesaugt und noch 2 x mit Methanol gewaschen, abgesaugt und getrocknet. Es wurde ein rosa PTFE-Pulver erhalten.

### 9.2 Fixierung des (PTFE-PF-O)ₘ-PO(OH)ₙ auf einer Stahloberfläche

Das rosa PTFE-Pulver wurde auf eine Stahlplatte aufgetragen und thermisch bei 330 °C eingebrannt, was eine fest sitzende hydrophobe Beschichtung ergab, die permanent wasserabweisend ist und auch durch Reiben oder Kratzen nicht entfernbar ist.

Im Vergleich dazu bildete ein unmodifiziertes PTFE-Pulver keine haftende Schicht. Und das reine (PF+PTFE)-2 bildete keine so fest haftende Schicht.

### 9.3 Schmierstoffwirkung des (PTFE-PF-O)ₘ-PO(OH)ₙ als Additiv in einem Fett

In 10 g Fett werden 1 g (PTFE-PF-O)ₘ-PO(OH)ₙ eingemischt/dispergiert. Dieses so modifizierte Fett wird vergleichend im Brugger-Test untersucht. Während das unmodifizierte Fett Brugger-Werte um 45 MPa aufwies, zeigte das mit PTFE-PF-O-PO(OH)ₙ-modifizierte Fett Brugger-Werte über 250 MPa, was auf eine wesentlich erhöhte Verschleißfestigkeit hinweist, die auf die Wirkung des haftgruppenmodifizierten (PTFE-PF-O)ₘ-PO(OH)ₙ zurückgeführt wird.

### Beispiel 10:

### Umsetzung des PF(Novolak)-modifizierten PTFE-Pulvers (PF+PTFE)-1 mit Phosphorverbindungen

### 10.1 Umsetzung des PF(Novolak)-modifizierten PTFE-Pulvers (PF+PTFE)-1 mit Phosphorylchlorid zur Herstellung eines haftgruppenmodifizierten PTFE-Pulvers [(PTFE-PF-O)ₘ-PO(OMe)ₙ] mit m = 1 und n = 2 oder m = 2 und n = 1

25 g (PF+PTFE)-1, gereinigt, werden in 200 ml NMP mittels Ultraturraxrührer unter Inertgas-/Stickstoffspülung dispergiert. Zur Dispersion werden bei 80 °C 5 ml Phosphorylchlorid zugesetzt und das Reaktionssystem 2 Stunden gerührt. Anschließend wird noch auf 100 °C erwärmt und nach 30 Minuten Rühren wurde die Reaktion beendet. Nach dem Abkühlen werden 100 ml Methanol zugegeben und 10 Minuten gerührt. Die Dispersion wird unter Rühren in Methanol gefällt und abgesaugt. Das Festprodukt wird dann 3 x in Wasser gerührt und abgesaugt, anschließend in Methanol 1 Stunde unter Rückfluss erhitzt und abgesaugt und noch 2 x mit Methanol gewaschen, abgesaugt und getrocknet. Es wurde ein rosa PTFE-Pulver [(PTFE-PF-O)ₘ-PO(OMe)ₙ] erhalten.

10.2 Umsetzung des PF(Novolak)-modifizierten PTFE-Pulvers (PF+PTFE)-1 mit Phosphorylchlorid zur Herstellung eines haftgruppenmodifizierten PTFE-Pulvers [(PTFE-PF-O)m-PO(OH)ₙ] mit m = 1 und n = 2 oder m = 2 und n = 1

25 g (PF+PTFE)-1, gereinigt, werden in 200 ml NMP mittels Ultraturraxrührer unter Inertgas-/Stickstoffspülung dispergiert. Zur Dispersion werden bei 80 °C 5 ml Phosphorylchlorid zugesetzt und das Reaktionssystem 2 Stunden gerührt. Anschließend wird noch auf 100 °C erwärmt und nach 30 Minuten Rühren wurde die Reaktion beendet. Nach dem Abkühlen werden 100 ml Wasser zugegeben und 10 Minuten gerührt. Die Dispersion wird unter Rühren in Methanol gefällt und abgesaugt. Das Festprodukt wird dann 3 x in Wasser gerührt und abgesaugt, anschließend in Methanol 1 Stunde unter Rückfluss erhitzt und abgesaugt und noch 2 x mit Methanol gewaschen, abgesaugt und getrocknet. Es wurde ein rosa PTFE-Pulver [(PTFE-PF-O)m-PO(OH)ₙ] erhalten.

### 10.3 Schmierstoffwirkung des (PTFE-PF-O)ₘ-PO(OMe)ₙ als Additiv in einem Öl

In 25 g Getriebeöl werden 1 g (PTFE-PF-O)ₘ-PO(OMe)ₙ eingemischt/mittels Zahnscheibenrührer dispergiert. Dieses so modifizierte Öl wird vergleichend im Brugger-Test untersucht. Während das unmodifizierte Getriebeöl Brugger-Werte von 35 MPa aufwies, zeigte das mit (PTFE-PF-O)ₘ-PO(OMe)ₙ -modifizierte Öl Brugger-Werte von 220 MPa, was auf die verbesserte Schmierwirkung und eine erhöhte Verschleißfestigkeit hinweist, die auf die Wirkung des haftgruppenmodifizierten (PTFE-PF-O)ₘ-PO(OMe)ₙ zurückgeführt wird.

### 10.4 Schmierstoffwirkung des (PTFE-PF-O)ₘ-PO(OH)ₙ als Additiv in einem Öl

In 25 g Getriebeöl werden 1 g PTFE-PF-O-PO(OH)ₙ eingemischt/mittels Zahnscheibenrührer dispergiert. Dieses so modifizierte Öl wird vergleichend im Brugger-Test untersucht. Während das unmodifizierte Getriebeöl Brugger-Werte von 35 MPa aufwies, zeigte das mit (PTFE-PF-O)ₘ-PO(OH)ₙ -modifizierte Öl Brugger-Werte von 350 MPa, was auf die verbesserte Schmierwirkung und eine erhöhte Verschleißfestigkeit hinweist, die auf die Wirkung des haftgruppenmodifizierten (PTFE-PF-O)ₘ-PO(OH)ₙ zurückgeführt wird.

### Beispiel 11:

Herstellung des Polyethylenglycol-modifizierten PTFE-Pulvers (PEG+PTFE)-a im Laborkneter

85 g PTFE (Zonyl MP1100, Emulsionspolymerisat, DuPont) werden mit 25 g Polyethylenglycol (PEG: mittlere Molmasse von 500 g/mol, α-/ω-hydroxyterminiert) vorgemischt und zusammen in eine elektrisch beheizte Knetkammer (Haake-Laborkneter, 50 ccm) gegeben und bei 250 °C 5 Minuten mit 100 U/min reaktiv umgesetzt. Nach Öffnen der Kammer wird das Produkt entnommen.

Nach Abtrennung/Extraktion der noch löslichen PEG-Anteile wird ein helles Festprodukt erhalten, das im IR-Spektrum die CH₂-Absorptionen des PEG aufweist. Eine Nachbehandlung des unlöslichen Festproduktes durch Rückflusserhitzung in Wasser, in einer wässrigen Butylamin-Lösung und auch in Methanol zeigte keine Veränderung, d.h. Absenkung der CH₂-Absorptionen im IR-Spektrum, was die Hydrolyse-, Aminolyse- und Alkoholysestabilität dieses Produktes.

### Beispiel 12:

Herstellung des Polyethylenglycol-modifizierten PTFE-Pulvers (PEG+PTFE)-b im Laborkneter

85 g PTFE (TF 2025, Emulsionspolymerisat, Dyneon/3M), gammabestrahlt mit 750 kGy werden mit 25 g Polyethylenglycol (PEG: mittlere Molmasse von 550 g/mol, α-butoxy-co-hydroxyterminiert) vorgemischt und zusammen in eine elektrisch beheizte Knetkammer (Haake-Laborkneter, 50 ccm) gegeben und bei 250 °C 5 Minuten mit 100 U/min reaktiv umgesetzt. Nach Öffnen der Kammer wird das Produkt entnommen.

Nach Abtrennung/Extraktion der noch löslichen PEG-Anteile wird ein helles Festprodukt erhalten, das im IR-Spektrum die CH₂-Absorptionen des PEG aufweist. Eine Nachbehandlung des unlöslichen Festproduktes durch Rückflusserhitzung in Wasser, in einer wässrigen Butylamin-Lösung und auch in Methanol zeigte keine Veränderung, d.h. Absenkung der CH₂-Absorptionen im IR-Spektrum, was die Hydrolyse-, Aminolyse- und Alkoholysestabilität dieses Produktes.

### Beispiel 13:

Herstellung des Polycaprolacton-modifizierten PTFE-Pulvers (PCI+PTFE) im Laborkneter

80 g PTFE (Zonyl MP1100, Emulsionspolymerisat, DuPont) werden mit 30 g Polycaprolacton (PCI: getrocknet, mittlere Molmasse von 1000 g/mol, α-/ω-hydroxyterminiert) vorgemischt und zusammen in eine elektrisch beheizte Knetkammer (Haake-Laborkneter, 50 ccm) gegeben und bei 250 °C 5 Minuten mit 100 U/min reaktiv umgesetzt. Nach Öffnen der Kammer wird das Produkt entnommen.

Nach Abtrennung/Extraktion der noch löslichen PCI-Anteile wird ein helles Festprodukt erhalten, das im IR-Spektrum die Esterbanden sowie die CH₂-Absorptionen des PCI aufweist. Die Nachbehandlung des unlöslichen Festproduktes durch Rückflusserhitzung in Wasser führte je nach Behandlungsdauer zu einer Absenkung der CH₂-Absorptionen im IR-Spektrum, was die eingeschränkte Hydrolyse- und folglich auch Aminolyse- und Alkoholysestabilität der gekoppelten Ketten dieses Produktes belegt.

### Beispiel 14:

Herstellung eines LCP/Vectra-modifizierten PTFE-Pulvers (LCP+PTFE) im Laborkneter

40 g Vectra A 950 (LCP/flüssigkristalliner Polyester: getrocknet) werden in einer elektrisch beheizten Knetkammer (Haake-Laborkneter, 50 ccm) aufgeschmolzen und nach Einstellung eines konstanten Drehmoments werden 20 g PTFE (Zonyl MP1100, Emulsionspolymerisat, DuPont) zugegeben und bei 280 °C 5 Minuten mit 100 U/min reaktiv umgesetzt. Nach Öffnen der Kammer wird das Produkt entnommen.

Nach Abtrennung der löslichen LCP-Anteile durch Lösen in Pentafluorphenol und Zentrifugieren vom unlöslichen Feststoff (diese Prozedur wird 5 Mal durchgeführt) wird ein helles Festprodukt erhalten, das gereinigt und getrocknet im IR-Spektrum Absorptionsbanden - vor allem die Esterbande des LCP aufweist. Eine Nachbehandlung des unlöslichen Festproduktes durch Rückflusserhitzung in wässriger Butylamin-Lösung führte zu einer Absenkung der Ester-Absorptionsbande im IR-Spektrum, was die eingeschränkte Beständigkeit gegenüber Aminolyse, Hydrolyse und Alkoholyse belegt.

### Beispiel 15:

Herstellung eines chemisch gekoppelten/kompatibilisierten Polycarbonat-PTFE-Materials (PC+PTFE) im Laborkneter

40 g Lexan 141 (Polycarbonat/PC: getrocknet) werden in einer elektrisch beheizten Knetkammer (Haake-Laborkneter, 50 ccm) aufgeschmolzen und nach Einstellung eines konstanten Drehmoments werden 20 g PTFE (TF 2025, Emulsionspolymerisat, Dyneon/3M; elektronenbestrahlt mit 1000 kGy) zugegeben und bei 300 °C 5 Minuten mit 100 U/min reaktiv umgesetzt. Nach Öffnen der Kammer wird das "elfenbeinartiges" Produkt entnommen.

Nach Abtrennung der löslichen PC-Anteile durch Lösen in Phenol/Tetrachlorethan (1:1) und Zentrifugieren vom unlöslichen Feststoff (diese Prozedur wird 5 Mal durchgeführt) wird ein helles Festprodukt erhalten, das gereinigt und getrocknet im IR-Spektrum Absorptionsbanden - vor allem die PC-Carbonylabsorption aufweist. Eine Nachbehandlung des unlöslichen Festproduktes durch Rückflusserhitzung in wässriger Ethanol-Lösung führte zu einer Absenkung dieser Carbonyl-Absorptionsbande im IR-Spektrum, was die eingeschränkte Beständigkeit gegenüber Alkoholyse, Aminolyse und Hydrolyse belegt.

Während reines/unmodifiziertes PC für tribologische Anwendungen aufgrund der Reibungs- und Verschleißeigenschaften ungeeignet ist, weist dieses Produkt im Klötzchen/Ring-Versuch typische Tribomaterialeigenschaften auf (Reibungszahl f = 0,20; Verschleißkoeffizient k = 2,7·10⁻⁶ mm³/Nm).

### Beispiel 16:

### Herstellung eines Polyphenylenether(PPE/PPO)-modifizierten PTFE-Pulvers (PPE+PTFE) im Laborkneter

90 g PTFE (TF 2025, Emulsionspolymerisat, Dyneon/3M; gammabestrahlt mit 500 kGy) und 15 g PPE-Pulver werden vorgemischt in einer elektrisch beheizten Knetkammer (Haake-Laborkneter, 50 ccm) bei 300 °C 5 Minuten mit 100 U/min reaktiv umgesetzt. Nach Öffnen der Kammer wird das Produkt entnommen.

Nach Abtrennung der löslichen PPE-Anteile durch Lösen/Extraktion in Xylol und Zentrifugieren vom unlöslichen Feststoff (diese Prozedur wird 5 Mal durchgeführt) wird ein helles Festprodukt erhalten, das gereinigt und getrocknet im IR-Spektrum die Absorptionsbanden des PPE aufweist. Eine Nachbehandlung des unlöslichen Festproduktes durch Rückflusserhitzung in wässriger Butylamin-Lösung führte zu keiner Absenkung der PPE-Absorptionsbanden im IR-Spektrum, was die Beständigkeit gegenüber Aminolyse, Hydrolyse und Alkoholyse belegt.

Dieses PPE+PTFE-Produkt wurde im Laborkneter mit Polystyrol im Verhältnis 80 % PS und 20 % PPE+PPE schmelzeverarbeitet.

Während PS für tribologische Anwendungen aufgrund der Reibungs- und Verschleißeigenschaften vollkommen ungeeignet ist, weist das PS/PPE+PTFE-Blendprodukt im Klötzchen/Ring-Versuch typische Tribomaterialeigenschaften auf (Reibungszahl f = 0,22; Verschleißkoeffizient k = 5,8·10⁻⁶ mm³/Nm).

### Beispiel 17:

### Herstellung des PF(Novolak)-modifizierten FEP-Produkts (PF+FEP) im Laborextruder

90 g Perfluorethylenpropylen-Copolymer (FEP: elektronenbestrahlt mit 500 kGy) und 15 g Novolak (Bakelite PF 0205 DF 04) werden zusammen in eine elektrisch beheizte Knetkammer (Haake-Laborkneter, 50 ccm) gegeben und bei 270 °C 5 Minuten mit 100 U/min reaktiv umgesetzt. Nach Öffnen der Kammer wird das Produkt entnommen.

Nach Abtrennung/Extraktion der noch löslichen PF-Anteile wird ein helles, rosafarbenes Festprodukt erhalten, das im IR-Spektrum Absorptionen des PF aufweist. Die Nachfolgeoperationen wie in Beispiel 1 führten zu derselben Aussage hinsichtlich der Hydrolyse, Aminolyse-, Alkoholyse- und Thermostabilität des (PF+FEP).

### Beispiel 18:

### Herstellung des PF(Novolak)-modifizierten PFA-Produkts (PF+PFA) im Laborkneter

90 g Perfluoralkoxypolymer (PFA: gammabestrahlt mit 500 kGy) und 15 g Novolak (Bakelite PF 0205 DF 04) werden zusammen in eine elektrisch beheizte Knetkammer (Haake-Laborkneter, 50 ccm) gegeben und bei 275 °C 5 Minuten mit 100 U/min reaktiv umgesetzt. Nach Öffnen der Kammer wird das Produkt entnommen.

Nach Abtrennung/Extraktion der noch löslichen PF-Anteile wird ein helles, rosafarbenes Festprodukt erhalten, das im IR-Spektrum Absorptionen des PF aufweist. Die Nachfolgeoperationen wie in Beispiel 1 führten zu derselben Aussage hinsichtlich der Hydrolyse, Aminolyse-, Alkoholyse- und Thermostabilität des (PF+PFA).

## Patentansprüche

1. Modifizierte Perfluor-Kunststoffe, bestehend aus strahlenchemisch oder plasmachemisch oder thermomechanisch modifizierten Perfluorpolymeren oder aus einem Gemisch aus strahlenchemisch und/oder plasmachemisch und/oder thermomechanisch modifizierten Perfluorpolymeren und niedermolekularen oder oligomeren oder polymeren Verbindungen jeweils mit mindestens einer Hydroxygruppe in Form von Phenolgruppen oder Hydroxyarylgruppen oder Hydroxyalkylgruppen oder mindestens einer phenolischen und mindestens einer aliphatischen Hydroxygruppe am Arylrest, die in einer Pulver- oder Pasten- oder Schmelzeverarbeitung unter Scherbedingungen reaktiv umgesetzt sind und die niedermolekularen oder oligomeren oder polymeren Di- oder Polyhydroxyaryl-Verbindungen über Etherbindungen chemisch an die Perfluorpolymere gekoppelt sind.

2. Modifizierte Perfluor-Kunststoffe nach Anspruch 1, bei denen als Perfluorpolymere PTFE-(Mikro-)Pulver vorhanden sind.

3. Modifizierte Perfluor-Kunststoffe nach Anspruch 1, bei denen mindestens zwei Hydroxygruppen in Form von Phenolgruppen oder Hydroxyarylgruppen oder Hydroxyalkylgruppen vorhanden sind.

4. Modifizierte Perfluor-Kunststoffe nach Anspruch 1, bei denen als niedermolekulare oder oligomere oder polymere aromatischen Mono- oder Di- oder Polyhydroxyaryl-Verbindungen Bisphenolkondensate oder Verbindungen aus der Klasse der Novolake (Phenol-Formaldehyd-Kondensate) oder Additionsprodukte aus Bisphenolkondensaten und Epoxiden, die mindestens eine phenolische Hydroxygruppe oder mindestens eine weitere Hydroxygruppe oder weitere reaktiv modifizierbare funktionelle Gruppen besitzen, oder aromatische Polyester oder Polycarbonat oder Polyphenylenether oder Gemische davon, oder Polyether-Verbindungen aus der Klasse der Polyglycole oder Polyester-Verbindungen oder Additionsprodukte aus Carbonsäure und Epoxiden, die mindestens eine aliphatische oder phenolische Hydroxygruppe oder weitere reaktiv modifizierbare funktionelle Gruppe besitzen, oder Gemische davon, vorhanden sind.

5. Modifizierte Perfluor-Kunststoffe nach den Ansprüchen 1 und/oder 4, bei denen als Di- oder Polyhydroxyaryl-Verbindungen 4,4'-Dihydroxydiphenylmethan oder 4,4'-Dihydroxydiphenylpropan oder 4,4'-Dihydroxydiphenylcyclohexan oder 4,4'-Dihydroxydiphenylether oder 4,4'-Dihydroxydiphenylsulfon oder 4,4'-Dihydroxybenzophenon oder Novolake in Form der Phenol-Formaldehyd(PF)-Kondensate oder Kresol-Formaldehyd-Kondensate vorhanden sind.

6. Modifizierte Perfluor-Kunststoffe nach Anspruch 1, bei denen die modifizierten Perfluorpolymere strahlenchemisch oder thermomechanisch modifiziert sind, wobei vorteilhafterweise die strahlenchemisch modifizierten Perfluorpolymere unter Sauerstoffeinfluss modifiziert sind oder als strahlenchemisch modifiziertes PTFE ein mit mindestens 20 kGy, vorteilhafterweise mit mindestens 100 kGy, strahlenchemisch modifiziertes PTFE vorhanden ist.

7. Modifizierte Perfluor-Kunststoffe nach Anspruch 1, bei denen die strahlenchemisch oder plasmachemisch oder thermomechanisch modifizierten Perfluorpolymere reaktive oder thermisch reaktivierbare Perfluoralkyl-(peroxy-)Radikal-Zentren oder -COOH- oder COF-Gruppen oder Perfluoralkylen-Gruppen oder thermisch in-situ aktivierbare Gruppen, die unter Eliminierung die Bildung perfluorolefinischer Gruppen bewirken, aufweisen.

8. Modifizierte Perfluor-Kunststoffe nach Anspruch 1, bei denen zur Realisierung der Scherbedingungen für die reaktive Umsetzung Mischer oder Kneter oder Zwei-oder Mehrwellenextruder oder Planetwalzenextruder eingesetzt sind.

9. Modifizierte Perfluor-Kunststoffe nach Anspruch 1, bei denen die reaktive Umsetzung bei Temperaturen von > 100 °C, vorzugsweise > 200 °C, erfolgt, oder die reaktive Umsetzung erfolgt bei Temperaturen von mindestens der oder über der Schmelzetemperatur des PTFE-Materials, wobei vorteilhafterweise eine weitere reaktive Umsetzung nach der reaktiven Umsetzung erfolgt.

10. Verfahren zur Herstellung von modifizierten Perfluor-Kunststoffen, bei dem strahlenchemisch oder plasmachemisch oder thermomechanisch modifizierte Perfluorpolymere oder ein Gemisch aus strahlenchemisch und/oder plasmachemisch und/oder thermomechanisch modifizierten Perfluorpolymeren und niedermolekulare oder oligomere oder polymere Verbindungen mit mindestens einer Hydroxygruppe in Form von Phenolgruppen oder Hydroxyarylgruppen oder Hydroxyalkylgruppen oder mindestens einer phenolischen und mindestens einer aliphatischen Hydroxygruppe homogenisiert und in Pulverform oder in Pastenform oder in Schmelze unter Scherbedingungen reaktiv umgesetzt werden.

11. Verfahren nach Anspruch 10, bei dem strahlenchemisch oder thermomechanisch modifiziertes Perfluorpolymer eingesetzt wird, wobei vorteilhafterweise strahlenchemisch unter Sauerstoffeinfluss modifizierte Perfluorpolymere eingesetzt werden, oder als strahlenchemisch modifiziertes PTFE ein mit mindestens 20 kGy, vorteilhafterweise mit mindestens 100 kGy, strahlenchemisch modifiziertes PTFE eingesetzt wird.

12. Verfahren nach Anspruch 10, bei dem zur Realisierung der Scherbedingungen für die reaktive Umsetzung Kneter oder Zwei- oder Mehrwellenextruder oder Planetwalzenextruder eingesetzt werden.

13. Verfahren nach Anspruch 10, bei dem die reaktive Umsetzung bei Temperaturen von > 100 °C und vorzugsweise > 200 °C durchgeführt wird, oder die reaktive Umsetzung wird bei Temperaturen von mindestens der oder über der Schmelzetemperatur des PTFE-Materials durchgeführt, wobei vorteilhafterweise eine weitere reaktive Umsetzung nach der reaktiven Umsetzung durchgeführt wird.

14. Verfahren nach Anspruch 10, bei dem das modifizierte Perfluorpolymer im Gemisch mit der/n niedermolekularen oder oligomeren oder polymeren Verbindung(en) mit mindestens einer Hydroxygruppe in einem Kneter oder (Mehrwellen-)Extruder als Pulver- oder Pastenmischung unter Scherung bei Temperaturen > 100 °C, vorzugsweise > 200 °C verarbeitet wird.

15. Verwendung von modifizierten Perfluor-Kunststoffen nach Anspruch 1 bis 9, die hergestellt sind nach Anspruch 10 bis 14, als Additiv in Fetten, Ölen oder in Gleitlacken, als Additiv/Bestandteil in PF/Phenol-Formaldehyd- oder Epoxydharzen und andere aushärtbare Harze/Polymersubstanzen oder in Thermoplasten für tribologisch beanspruchte Form-/Bauteile oder als reaktive Blendkomponente oder in Substanz zur Substratoberflächenmodifizierung oder als Beschichtung von Bauteilen.

## Claims

1. Modified perfluoroplastics consisting of radiation-chemically or plasma-chemically or thermomechanically modified perfluoropolymers or of a mixture of radiation-chemically and/or plasma-chemically and/or thermomechanically modified perfluoropolymers and low molecular mass or oligomeric or polymeric compounds in each case having at least one hydroxyl group in the form of phenol groups or hydroxyaryl groups or hydroxyalkyl groups or having at least one phenolic and at least one aliphatic hydroxyl group on the aryl radical, which are reactively converted in a powder or paste or melt processing operation under shearing conditions, and the low molecular mass or oligomeric or polymeric di- or polyhydroxyaryl compounds are coupled chemically to the perfluoropolymers via ether bonds.

2. Modified perfluoroplastics according to Claim 1, wherein perfluoropolymers present comprise PTFE (micro)powders.

3. Modified perfluoroplastics according to Claim 1, wherein at least two hydroxyl groups are present in the form of phenol groups or hydroxyaryl groups or hydroxyalkyl groups.

4. Modified perfluoroplastics according to Claim 1, wherein low molecular mass or oligomeric or polymeric aromatic mono- or di- or polyhydroxyaryl compounds present comprise bisphenol condensates or compounds from the class of the novolaks (phenol-formaldehyde condensates) or adducts of bisphenol condensates and epoxides which possess at least one phenolic hydroxyl group or at least one other hydroxyl group or other reactively modifiable functional groups, or aromatic polyesters or polycarbonate or polyphenylene ethers or mixtures thereof, or polyether compounds from the class of the polyglycols or polyester compounds or adducts of carboxylic acid and epoxides which possess at least one aliphatic or phenolic hydroxyl group or other reactively modifiable functional group, or mixtures thereof.

5. Modified perfluoroplastics according to Claims 1 and/or 4, wherein di- or polyhydroxyaryl compounds present comprise 4,4'-dihydroxydiphenylmethane or 4,4'-dihydroxydiphenylpropane or 4,4'-dihydroxydi-phenylcyclohexane or 4,4'-dihydroxydiphenyl ether or 4,4'-dihydroxydiphenyl sulfone or 4,4'-dihydroxybenzophenone or novolaks in the form of phenol-formaldehyde (PF) condensates or cresolformaldehyde condensates.

6. Modified perfluoroplastics according to Claim 1, wherein the modified perfluoropolymers are radiation-chemically or thermomechanically modified, advantageously the radiation-chemically modified perfluoropolymers being modified under the influence of oxygen, or radiation-chemically modified PTFE present comprises a PTFE modified radiation-chemically with at least 20 kGy, advantageously with at least 100 kGy.

7. Modified perfluoroplastics according to Claim 1, wherein the radiation-chemically or plasma-chemically or thermomechanically modified perfluoropolymers contain reactive or thermally reactivatable perfluoroalkyl (peroxy) radical centres or -COOH or COF groups or perfluoroalkylene groups or groups activatable thermally in situ, which, with elimination, result in the formation of perfluoroolefinic groups.

8. Modified perfluoroplastics according to Claim 1, wherein the shearing conditions for the reactive conversion are realized using mixers or compounders or twin-screw or multiscrew extruders or planetary roller extruders.

9. Modified perfluoroplastics according to Claim 1, wherein the reactive conversion takes place at temperatures of > 100°C, preferably > 200°C, or the reactive conversion takes place at temperatures of at least the or above the melting temperature of the PTFE material, advantageously a further reactive conversion taking place after the reactive conversion.

10. Process for producing modified perfluoroplastics, wherein radiation-chemically or plasma-chemically or thermomechanically modified perfluoropolymers or a mixture of radiation-chemically and/or plasma-chemically and/or thermomechanically modified perfluoropolymers and low molecular mass or oligomeric or polymeric compounds having at least one hydroxyl group in the form of phenol groups or hydroxyaryl groups or hydroxyalkyl groups or having at least one phenolic and at least one aliphatic hydroxyl group are homogenized and reactively converted in powder form or in paste form or in the melt under shearing conditions.

11. Process according to Claim 10, wherein radiation-chemically or thermomechanically modified perfluoropolymer is used, where advantageously perfluoropolymers modified radiation-chemically under the influence of oxygen are used, or radiation-chemically modified PTFE used comprises a PTFE modified radiation-chemically with at least 20 kGy, advantageously with at least 100 kGy.

12. Process according to Claim 10, wherein the shearing conditions for the reactive conversion are realized using compounders or twin-screw or multiscrew extruders or planetary roller extruders.

13. Process according to Claim 10, wherein the reactive conversion is carried out at temperatures of > 100°C and preferably > 200°C, or the reactive conversion is carried out at temperatures of at least the or above the melting temperature of the PTFE material, a further reactive conversion advantageously being carried out after the reactive conversion.

14. Process according to Claim 10, wherein the modified perfluoropolymer is processed in a mixture with the one or more low molecular mass or oligomeric or polymeric compounds having at least one hydroxyl group in a compounder or (multiscrew) extruder as a powder or paste mixture with shearing at temperatures > 100°C, preferably > 200°C.

15. Use of modified perfluoroplastics according to Claim 1 to 9, produced according to Claim 10 to 14, as additive in greases, oils or in lubricating varnishes, as additives/constituent and PF/phenol-formaldehyde resins or epoxy resins and other curable resins/polymer substances or in thermoplastics for tribologically challenged mouldings/components or as reactive blend component or in bulk for substrate surface modification or as coating of components.

## Revendications

1. Plastiques perfluorés modifiés, constitués de perfluoropolymères modifiés par irradiation ou par plasma ou par voie thermomécanique ou d'un mélange de perfluoropolymères modifiés par rayonnement et/ou par plasma et/ou par voie thermodynamique et de composés à faible masse moléculaire ou oligomères ou polymères dont chacun comporte au moins un groupe hydroxy sous forme de groupes phénol ou de groupes hydroxyaryle ou de groupes hydroxyalkyle ou au moins un groupe phénolique et au moins un groupe aliphatique dans le radical aryle, qui sont mis à réagir par voie réactive dans les conditions d'un cisaillement dans le cadre d'un traitement en poudre ou en pâte ou à l'état fondu, et les composés di- ou polyhydroxyaryles à faible masse moléculaire ou oligomères ou polymères étant couplés par voie chimique par l'intermédiaire de liaisons éther aux perfluoropolymères.

2. Plastiques perfluorés modifiés selon la revendication 1, dans lesquels on a, présents en tant que perfluoropolymère, des (micro)poudres de PTFE.

3. Plastiques perfluorés modifiés selon la revendication 1, dans lesquels au moins deux groupes hydroxy sont présents sous formes de groupes phénol ou de groupes hydroxyaryle ou de groupes hydroxyalkyle.

4. Plastiques perfluorés modifiés selon la revendication 1, dans lesquels sont présents en tant que composés mono- ou di- ou polyhydroxyaryles aromatiques à faible masse moléculaire ou oligomères ou polymères, des produits de condensation du bisphénol ou des composés de la classe des novolaques (produits de condensation phénol-formaldéhyde) ou des produits d'addition de produits de condensation du bisphénol et d'époxydes, qui possèdent au moins un groupe hydroxy phénolique ou au moins un groupe hydroxy supplémentaire ou des groupes fonctionnels supplémentaires modifiables par voie réactive, ou des polyesters aromatiques ou un polycarbonate ou un polyphénylèneéther ou des mélanges de ceux-ci, ou des composés polyéther de la classe des polyglycols ou des composés polyesters ou des produits d'addition d'un acide carboxylique et d'époxydes, qui possèdent au moins un groupe hydroxy aliphatique ou phénolique ou un groupe fonctionnel supplémentaire modifiable par voie réactive, ou des mélanges de ceux-ci.

5. Plastiques perfluorés modifiés selon les revendications 1 et/ou 4, dans lesquels sont présents en tant que composés di- ou polyhydroxyaryles le 4,4'-dihydroxydiphénylméthane ou le 4,4'-dihydroxydiphénylpropane ou le 4,4'-dihydroxydiphénylcyclohexane ou le 4,4'-dihydroxydiphényléther ou la 4,4'-dihydroxydiphénylsulfone ou la 4,4'-dihydroxybenzophénone ou des novolaques sous forme de produits de condensation phénol-formaldéhyde (PF) ou des produits de condensation crésol-formaldéhyde.

6. Plastiques perfluorés modifiés selon la revendication 1, dans lesquels les perfluoropolymères modifiés sont modifiés par rayonnement ou par voie thermomécanique, avantageusement les perfluoropolymères modifiés par rayonnement étant modifiés sous l'influence de l'oxygène, ou, en tant que PTFE modifié par rayonnement, est présent un PTFE modifié par rayonnement avec au moins 20 kGy, avantageusement avec au moins 100 kGy.

7. Plastiques perfluorés modifiés selon la revendication 1, dans lesquels les perfluoropolymères modifiés par rayonnement ou par plasma ou par voie thermomécanique comportent des centres radicalaires perfluoralkyl-(peroxy) réactivables par voie réactive ou thermique ou des groupes -COOH ou COF ou des groupes perfluoralkylène ou des groupes activables *in situ* par voie thermique, qui par élimination provoquent la formation de groupes perfluorooléfiniques.

8. Plastiques perfluorés modifiés selon la revendication 1, dans lesquels, pour réaliser les conditions de cisaillement pour la réaction par voie réactive, on utilise des mélangeurs ou des malaxeurs ou des extrudeuses à deux ou plusieurs vis ou des extrudeuses à vis planétaires.

9. Plastiques perfluorés modifiés selon la revendication 1, dans lesquels la réaction par voie réactive a lieu à des températures > 100 °C, de préférence > 200 °C, ou la réaction par voie réactive a lieu à des températures d'au moins la température de fusion du matériau PTFE ou supérieure à celle-ci, avantageusement une réaction par voie réactive supplémentaire ayant lieu après la réaction par voie réactive.

10. Procédé de fabrication de plastiques perfluorés modifiés, dans lequel on homogénéise des perfluoropolymères modifiés par rayonnement ou par plasma ou par voie thermodynamique ou un mélange de perfluoropolymères modifiés par rayonnement et/ou par plasma et/ou par voie thermodynamique et des composés à faible masse moléculaire ou oligomères ou polymères ayant au moins un groupe hydroxy sous forme de groupes phénol ou de groupes hydroxyaryle ou de groupes hydroxyalkyle ou d'au moins un groupe hydroxy phénolique et d'au moins un groupe aliphatique, et on les fait réagir par voie réactive sous forme de poudre ou sous forme de pâte ou à l'état fondu dans les conditions d'un cisaillement.

11. Procédé selon la revendication 10, dans lequel on utilise un perfluoropolymère modifié par rayonnement ou par voie thermomécanique, avantageusement on utilise des perfluoropolymères modifiés par rayonnement sous l'influence de l'oxygène, ou on utilise en tant que PTFE modifié par irradiation un PTFE modifié par irradiation avec au moins 20 kGy, avantageusement avec au moins 100 kGy.

12. Procédé selon la revendication 10, dans lequel, pour réaliser les conditions d'un cisaillement pour la réaction par voie réactive, on utilise des malaxeurs ou des extrudeuses à deux ou plusieurs vis ou des extrudeuses à deux ou plusieurs vis ou des extrudeuses à vis planétaires.

13. Procédé selon la revendication 10, dans lequel la réaction par voie réactive est mise en œuvre à des températures > 100 °C et de préférence > 200 °C, ou la réaction par voie réactive est mise en œuvre à des températures d'au moins la température de fusion du matériau PTFE ou supérieure à celle-ci, avantageusement une réaction supplémentaire par voie réactive étant mise en œuvre après la réaction par voie réactive.

14. Procédé selon la revendication 10, dans lequel le perfluoropolymère modifié est, en mélange avec le ou les composés à faible masse moléculaire ou oligomères ou polymères ayant au moins un groupe hydroxy, transformé sous forme d'un mélange en poudre ou en pâte sous cisaillement à des températures > 100 °C, de préférence > 200 °C.

15. Utilisation de plastiques perfluorés modifiés selon les revendications 1 à 9, qui sont fabriqués conformément aux revendications 10 à 14, comme additif dans des graisses, des huiles ou dans des laques lubrifiantes, comme additif/constituant dans des résines de PF/phénol-formaldéhydes ou époxy et d'autres résines/substances polymères durcissables ou dans des thermoplastiques pour des composants/pièces façonnés subissant des contraintes tribologiques ou comme composants de mélange réactif ou en l'absence de solvants pour la modification d'un substrat en surface ou comme revêtement de composants.
